Europäisches Patentamt

European Patent Office

Office européen des brevets

(19)

(11) Publication number: **0 020 705**
**B1**

(12) **EUROPEAN PATENT SPECIFICATION**

(45) Date of publication of patent specification: **19.09.84**

(51) Int. Cl.³: **B 01 D 45/06, F 28 F 25/00**

(21) Application number: **80900101.9**

(22) Date of filing: **21.11.79**

(86) International application number:
**PCT/US79/01004**

(87) International publication number:
**WO 80/01046 29.05.80 Gazette 80/12**

(54) **MIST ELIMINATOR AND METHOD FOR REMOVING DROPLETS OF LIQUID ENTRAINED IN A GAS STREAM.**

(30) Priority: **22.11.78 US 962982**

(43) Date of publication of application:
**07.01.81 Bulletin 81/01**

(45) Publication of the grant of the patent:
**19.09.84 Bulletin 84/38**

(84) Designated Contracting States:
**CH DE FR GB NL SE**

(56) References cited:
**DE-A-1 901 014**
**GB-A- 13 297**
**US-A-1 926 924**
**US-A-2 356 192**
**US-A-2 583 171**
**US-A-2 892 509**
**US-A-2 911 011**
**US-A-3 065 587**
**US-A-3 276 193**
**US-A-3 731 461**
**US-A-3 748 832**

(73) Proprietor: **OVARD, John C.**
**3465 Ridgeview Drive**
**Santa Rosa, CA 95404 (US)**

(72) Inventor: **OVARD, John C.**
**3465 Ridgeview Drive**
**Santa Rosa, CA 95404 (US)**

(74) Representative: **Reinländer & Bernhardt**
**Patentanwälte**
**Orthstrasse 12**
**D-8000 München 60 (DE)**

(56) References cited:

**US-A-3 778 983**
**US-A-3 813 855**
**US-A-3 876 396**
**US-A-3 912 471**
**US-A-4 014 669**

Courier Press, Leamington Spa, England.

## Description

The present invention relates to a mist eliminator for removing droplets of liquid entrained in a gas stream comprising: a plurality of longitudinally extending eliminator blades positioned in side by side spaced apart relation for passing a gas stream through the space between adjacent blades from an inlet to an outlet, each blade having an inlet inclined section and an outlet inclined section, said inlet and said outlet inclined sections having opposite slope and connected by an intermediate transition section thereby establishing a convex surface on the bottom of said blade and a concave surface on the top surface of said blade.

The present invention relates also to a method of removing droplets entrained in a gas stream suited for a mist eliminator such as one mentioned above comprising the steps of: first turning the gas stream at one side toward the other side and accelerating the stream for collecting large droplets at said one side, turning the gas stream back toward said one side.

Such a mist eliminator and method is described in DE—A 19 01 014. The mist eliminator comprises a plurality of longitudinally extending eliminator blades positioned in side by side spaced apart relation for passing a gas stream through the space between adjacent blades from an inlet to an outlet. Each blade has an inlet inclined section and an outlet inclined section. Said inlet and said outlet inclined sections have opposite slope and are connected by an intermediate transition section thereby establishing a convex surface on the bottom of said blade and a concave surface on the top surface of said blade. In general terms said blades are sinus-shaped. The blades have an increased thickness midway along the path between the blades for accelerating the gas stream. This configuration results in the convex surface of the blade having a height or deviation greater than the depth or deviation of the concave surface of the blade.

The FR—A—22 70 924 teaches a similar mist eliminator having sinus-shaped blades. Additionally there are provided curved deflectors which are disposed in one embodiment on both of the facing surfaces of the blades at or upstream of the maximum deflection of the blades. Further said deflectors are disposed about half way along the passage through the blades. This construction would result in an ineffectual collection of both the large water droplets and the small water droplets at one location in the path through the blades where a high velocity is obtained which would most likely re-entrain at least some of the droplets into the air stream passing between the blades.

Finally GB—A—13 279 (AD 1910) shows a mist eliminator comprising angularly shaped blades having convex projecting surfaces from both of its depositing surfaces at the trailing edge of the blades. The purpose of said enlarged end of the blades is as follows: liquid already deposited on the blade surfaces is driven toward the trailing edge by flowing gas, and the liquid will be carried away with the gas as it leaves the surface edge unless some means are provided to separate the gas and the liquid stream before the extremity of the blade is reached. In this British Reference both projecting surfaces are provided for establishing a protected point at the very end of the blade whereby liquid adhering to the surface of the blade is allowed to reach the protected point outside the influence of the flowing gas where liquid can collect and drain. The collecting of the droplets is performed at the downstream side of the dual projecting surfaces. Furthermore said British patent emphasizes with respect to the projecting surfaces on both sides of the blades that there be a gradual merger of the projecting surface into the main surface and necessary to avoid eddying action. Generally there are a number of industrial processes wherein a liquid and a gas come into direct contact with each other as a part of the process. As a result of viscous and aerodynamic forces, liquid droplets of various sizes are entrained and carried along with the moving gas stream. In most instances it is desirable or even mandatory that these droplets be removed from the gas stream for economic or environmental reasons.

There are five primary considerations in the design and application of mist elimination devices:

First and foremost is the requirement of a high collection efficiency in the removal of liquid droplets. Without a high collection efficiency over the full liquid droplet size range encountered, the device has limited application. Most known mist eliminators have high droplet collection efficiences for droplet sizes of 100 microns or greater in the gas velocity range of current application practice. However, in droplet sizes below 100 microns droplet collection efficiencies fall off rapidly. In many processes the majority of entrained droplets are found in the smaller size ranges. When high collection efficiencies for smaller droplet size ranges are required with known mist eliminators it becomes necessary to take additional steps or to restrict operating limits to remove these smaller droplets. Common means for doing this in current practice are to add secondary droplet removal devices, to limit gas flow velocities, to increase the density of mist removal components, to utilized mist eliminator designs with higher energy consumption or some combination of the above.

The second consideration in mist eliminator design is to minimize the resistance to gas flow through the device. A high gas flow resistance per unit area will result in high energy consumption and will normally require large gas moving equipment or an increase in the size of the process equipment itself.

A third design consideration is to assure that liquid collected on mist eliminator surfaces will not be torn from these surfaces at critical points by viscous and aerodynamic forces imposed by gas flow through the device thereby causing carry over and liquid re-entrainment which negates the purpose and effectiveness of the mist eliminator. This phenomenon is primarily a function of mist eliminator design characteristics and gas flow rate. The gas velocity at which carry over and re-entrainment become a significant problem may be described as the breakdown velocity.

The fourth design consideration is in providing an adequate means for draining collected liquid from the mist eliminator such that liquid does not build up on the mist eliminator surfaces thereby restricting gas flow or creating a carry over problem as previously described. In mist eliminators employing meshes or screens or those that use a bed filled beads or rings, etc., this can be a major design limitation. In blade type designs such as the prior art mentioned above and such as the present invention, drainage is not usually a major concern. Collected liquid will naturally adhere to the blade surface and will drain as large drops or streams ultimately flowing by gravity to the liquid means of the process apparatus. Liquid flow may be directed to a specific point which is shielded from the main gas flow stream by inclining blades or the entire mist eliminator assembly at an angle relative to a horizontal plane.

The final design consideration relates to a structural integrity, dimensional stability and ease of assembly and installation.

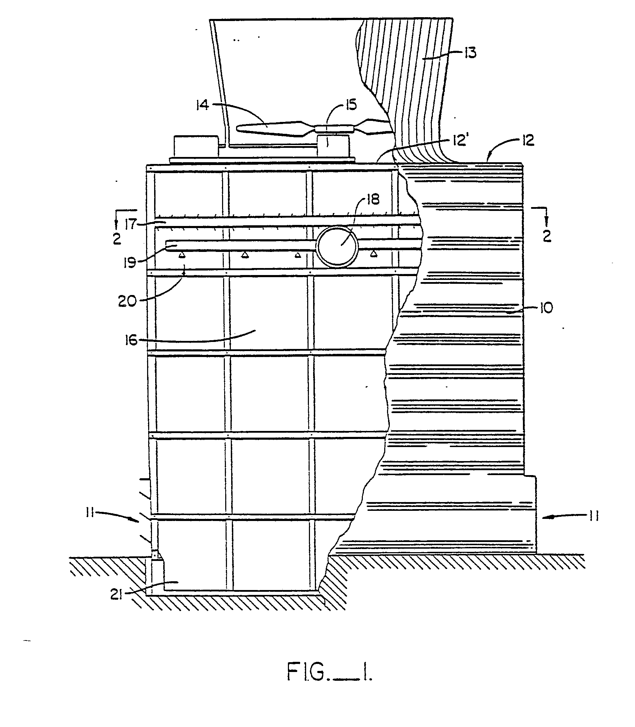

Illustrations of the principal prior mist eliminator designs and a newly proposed design are presented in a very recent article entitled "Design Studies of Current Design and Improved Cooling Tower Drift Eliminators" by Joseph K. Chan and Michael W. Golay, presented at the Symposium on Environmental Effects of Cooling Tower Emissions, at University of Maryland, May, 1978, Proceedings III pages 127—149. That article illustrates the (a) sinus-shaped, (b) HI—V, (c) zig-zag, (d) single-layer louver, (3) double-layer louver, and (f) asbestos-cement drift eliminator geometrics in Figure 1 and a recent airfoil drift eliminator geometry in Figure 15. The specific construction of a geometry referred to as the "HI—V" geometry is illustrated in U.S. Patent No. 3,748,832, to D. B. Furlong and J. C. Ovard which is assigned to Fluor Cooling Products Company.

Referring to the fifth design consideration mentioned above US—A—3 276 193 shows an eliminator blade assembly with subassemblies forming mechanical interlocking means for connecting blades. These subassemblies are composed of two channel members contained one within the other with the open channels of each facing each other. One channel member is of simple construction, having a web and two relatively short flanges which provide structural rigidity. This channel fits within the other channel and acts as an abutting and aligning member for the eliminator blades. The other channel is a more complex construction containing an elongate web and two short flanges extending at right angles from the longitudinal edges of the web. The two flanges thereby being in parallel alignment orientation. Extending from the flange is a plurality of parallel flat closely spaced legs. Each leg has a laterally displaced fulcrum member joined to it. Each fulcrum member is substantially perpendicular to the plane of the web. The fulcrum member is joined to the leg by a connecting web. Each blade has an inwardly directed fringe member extending along each longitudinal edge in spaced relation to the main body portion of the blade. This fringe member is coupled with the fulcrum whereby the retained eliminator blade can pivot about said fulcrum.

All mist eliminators of the prior art mentioned above do not fulfill each of the five design considerations mentioned above. In particular the third design consideration concerning the carry over and liquid re-entrainment is a serious problem with the mist eliminators of DE—A—19 01 014 and GB—A—13 279.

Broadly stated, the present invention to be described in greater detail below, is directed to a mist eliminator which incorporates the design considerations mentioned above.

Starting from DE—A—19 01 014 it is the object of the invention to improve the known method and mist eliminator in such a way that a liquid re-entrainment is avoided over the full range of droplet sizes encountered in direct contact liquid and gas process.

This object is fulfilled in a mist eliminator by means forming a further convex surface only on said outlet inclined section of said concave surface, on the top surface of said blade and in continuity with said concave surface and projecting into the gas stream for establishing a stagnation region upstream of said convex surface means.

The above mentioned object is also solved by accelerating the stream after turning the gas stream back toward said one side and establishing a stagnation region only at said other side down stream of said second turn for collecting small droplets at said other side of said stream.

This invention provides a highly efficient means for collecting droplet mists in a gas stream over a wide range of droplet sizes and gas velocities, and the droplet removal task is accomplished with low energy consumption. This device, commonly referred to as a mist eliminator or drift eliminator, is adaptable to direct contact processes employing either counterflow or crossflow liquid and gas flow relationships and is particularly suitable for removing water droplets from an air stream as required in cooling towers of either the counterflow or crossflow type.

**0 020 705**

Furthermore, the mist eliminator of the present invention has a substantially higher droplet collection efficiency particularly in the smaller droplet sizes over a wider range of gas velocities than heretofore known thereby eliminating the need for employing a secondary removal means or limiting operational parameters either of which result in higher equipment first cost and higher energy consumption.

The mist eliminator of the present invention has an air resistance characteristics similar to known low energy loss mist eliminators but achieves higher collection efficiencies at stable operation over a wider range of velocities than the known mist eliminators.

The breakdown velocity mentioned above of the present invention is from 20 to 80% higher than known mist eliminator designs thereby allowing higher gas flow rates through the mist eliminator while maintaining high droplet collection efficiencies and assuring stable operation.

The mist eliminator of claims 5 and 6 presents a design which incorporates a simple and unique mechanical interlocking means for connecting blades and end plates which allow mist eliminators to be assembled into panels. It also assures dimensional accuracy and consistency during and after assembly and provides a positive blade seal in panel assemblies.

A very important distinction between the present invention and GB—A—13 297 lies therein that said British patent designs its plates to allow for collection of droplets at the very end of the blade and utilizes convex projecting surfaces on both sides of the blade to provide a protected zone downstream of the convex projecting surface. As distinct from the apparatus and method of this British patent the present invention provides an abrupt convex surface on only one side of the blade for establishing a stagnation region upstream of the convex surface as contrasted with the protected zone downstream of the projected surface in said British patent. The construction of the present application is designed to intercept the fine mist particles at the projecting convex surface due to upstream stagnation region. British patent collects its droplets at the downstream side of its dual projecting surfaces. Thus, the construction and intended operation of the method and apparatus of the present invention is opposed to the construction and intended operation of the British patent. Finally, the British patent specifies that the convex surfaces of that system must gradually merge into the depositing surface downstream, and it is necessary to avoid eddying action, which would cause a re-entry of droplets from the protected zone.

In a preferred embodiment of the present invention the outlet section has a trailing end differing in shape from the leading end of the inlet section.

Further preferred embodiments of the invention are shown in the sub-claims. In summary, the mist eliminator of the present invention removes liquid droplets from a gas stream having a significantly higher small droplet collection efficiency than known mist eliminators with comparable low gas flow resistance characteristics as commonly employed in direct contact liquid and gas industrial process or heat exchange apparatus. Gas entrained liquid droplets impinge on mist eliminator blades where they are collected and subsequently drained to the liquid collecting means of the apparatus. The blades have an aerodynamically efficient shape to minimize resistance to gas flow and are designed to minimize carry over and to extend the useful gas flow operating range of the mist eliminator. It can be easily manufactured as either a single wall or a double wall blade from a variety of plastic, metal or other materials.

Brief Description of Drawings

Figure 1 is a schematic elevational view, partially broken away, illustrating a counterflow cooling tower incorporating the present invention.

Figure 2 is a plan view of a portion of the structure shown in Figure 1 taken along line 2—2 in the direction of the arrows illustrating the outlet configuration of the mist eliminator of the present invention.

Figure 3 is a schematic prospective view, partially exploded and partially broken away, illustrating the interlocking feature of the blades and end panels making up the drift eliminator.

Figure 4 is an elevational sectional view through two blades such as illustrated in Figure 2 and taken along line 4—4 in the direction of the arrows and including streamlines illustrating the flow of the gas stream in the space between the blades.

Figure 5 is a view of one blade similar to the view in Figure 4 showing measurement positions along the airstream length of the blade to illustrate in conjunction with Table "1" a specific design for a drift eliminator blade in accordance with the preferred embodiment of this invention.

Best Mode for Carrying Out the Invention

A counterflow cooling tower as shown in FIG. 1 represents a typical application of mist eliminators to a direct contact heat exchanger. Those skilled in the art will recognize that the present invention is equally adaptable to crossflow cooling towers, gas scrubbers and other industrial processes where a moving gas carries entrained liquid droplets which must be removed from the gas stream.

Referring to FIG. 1, a mechanical draft counterflow cooling tower consisting of a housing 10 with air inlets 11 at the bottom on two opposing sides and top deck 12 with an opening 12' therein connected to a fan shroud 13. A fan 14 in the throat of the shroud 13 is rotated by a fan drive system 15 and draws air through the cooling tower housing 10. Air is drawn through the air inlets 11, turns and flows vertically upward through a direct contact heat exchange section 16, through the mist eliminator section 17 and upward through the fan 14 after which it is discharged to the atmosphere at the exit of the fan shroud 13 in a heated condition. Concurrently, heated water is pumped through a water distribution system to the top of the tower where it enters a header 18 and flows to lateral pipes 19 and is sprayed uniformly over the entire plan area within the housing 10 by a plurality of spray nozzles 20 in direct communication with the lateral pipes 19. Liquid thus distributed falls by gravity counter-current to the direction of air flow through the heat exchanger section 16 until it reaches the water collecting basin 21 in the cooled condition. In the heat exchanger section the water comes in contact with a fill material whose primary purpose is to create the most intimate mixing of water and air practical to promote water cooling by a combination of evaporation and sensible heat transfer. The fill material disperses the water by a combination of splash promoting means and the formation of thin liquid films on the surfaces of the fill material and structure. The smaller droplets created by this process and those generated immediately above by the spray nozzles 20 become entrained and are carried upward with the main flow of air as a result of their light weight and the relatively higher viscous and aerodynamic forces imposed on them by the upwardly moving air. In the absence of a mist eliminator section 17 these droplets would be discharged to the atmosphere along with the main body of heated air. As the air velocity dissipates in the atmosphere these droplets will fall like rain in the surrounding area. This creates a hazard to electrical equipment and can also create corrosion problems on equipment in the immediate vicinity of the tower. In instances where sea or brackish water is circulated through the system these problems can be severe and additional irreparable damage to plant life may also occur due to the salt content.

The mist eliminator section 17 of the present invention consists of a plurality of preassembled mist eliminator panels 22 which can best be seen in FIG. 2. Mist eliminator panels 22 consist of a plurality of blades 23 of unique profile which are connected to end plates 24 by a mechanical interlocking means as hereinafter described. Entrained droplets impinge on blade surfaces where they combine into larger droplets or liquid films which ultimately fall by gravity to the water collecting means 21 of the tower.

The mist eliminator panels 22 are assembled by means of mechanical interlocking notches in the blades 23 and flanged end plates 24 respectively. Once assembled the mechanical interlocking means prevents blade rotation and movement in any direction. It also provides a positive means of establishing and fixing the space and position relationships between adjacent blades and blades and end plates. Movement of blades and end plates is totally restricted and disengagement of blades and end plates is prevented once assembly is completed. Assembly does not require fasteners or bonding agents and can be accomplished quickly and easily without the use of special tools or equipment. Further, this interlocking method does not depend on the resilience or flexibility of the blade or end plate material for its application. In addition, end plate structural strength and dimensional stability are not compromised by a plurality of slots of large dimension relative to the overall width of either the end plate web or flange elements.

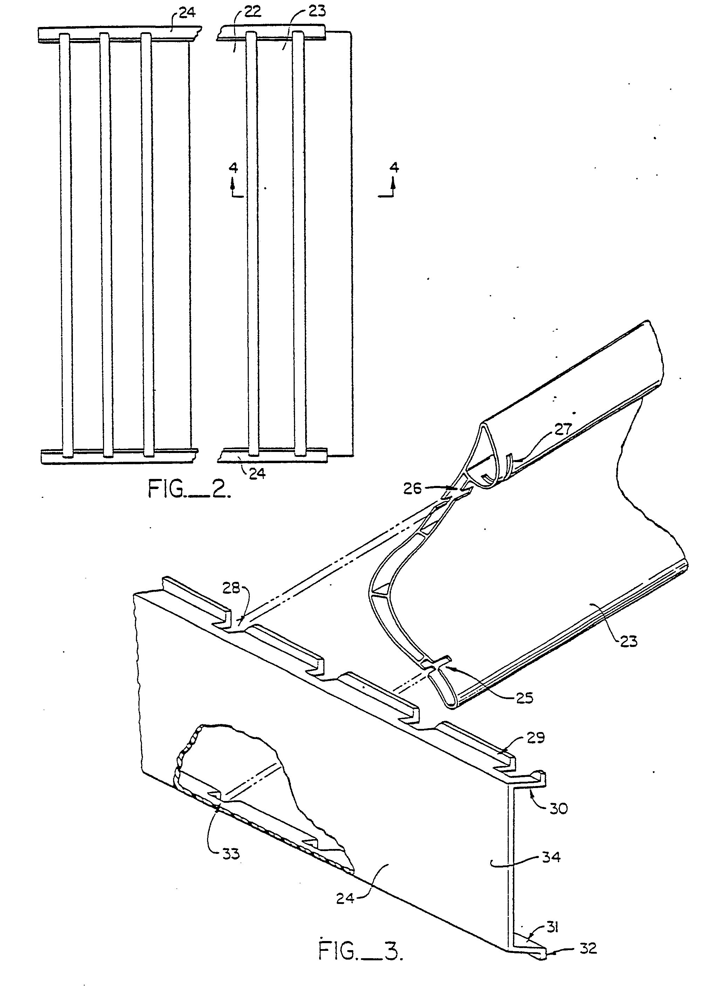

The unique mechanical interlocking assembly method of the present invention can best be described by referring to FIG. 3.

As illustrated in FIG. 3 each mist eliminator blade 23 includes a pair of longitudinally extending, spaced apart, precut notches 25 and 26 in the blade body and a transversely extending notch 27 aligned in the direction of the gas stream over the blade body, the notches 27 being made in an airfoil top surface of the blade to be described in greater detail below.

A pair of flanged end plates for supporting the ends of the blades are provided with notches corresponding to those in the blade for achieving the mechanical interlocking assembly. One end plate 24 is illustrated in FIG. 3 and includes an end plate web 34 provided with top and bottom flanges 30 and 31 which are in turn provided, respectively, with upwardly and downwardly projecting adjoining ribs 29 and 32 at the flange extremities. Series of precut notches 28 and 32 are provided into the top and bottom flanges 31 and 32, respectively, which correspond in spacing and are arranged for receiving the end notches 26 and 25, respectively, of the blade.

To assemble the blades 23 and end panels 24 blade 23 is rotated counter-clockwise from final assembly position until top blade surface containing notch 27 will clear top flange rib 29 when notches 26 and 28 are engaged. Blade notches 26 and 27 and end plate notch 28 are proportioned such that blade end or end plate 24 may be rotated slightly when notches 26 and 28 are engaged thereby avoiding interference between blade end in the vicinity of notch 25 and plate lower flange 31. With notches 26 and 28 engaged, blade 23 is rotated clockwise until blade notch 25 is aligned for engagement with end plate notch 33. Engagement is then completed by application of a small force which interlocks blade notch 25 and end plate notch 33 and returns blade end and end plate web 34 to parallel relationship. As clockwise rotation of blade 23 is taken to align blade notch 25 and end plate notch 33, blade top surface containing notch 27 rotates also thereby interlocking with top flange rib 29 which prevents disengagement of blades and end plate. With the attachment of blades and end plates completed as described above, the elements of the mist eliminator panel assembly are restricted and cannot disengage. Dimensional relationships between elements are fixed and the assembly can only be taken apart by an exact step by step reversal of assembly procedure described above.

Blade notch 25 is proportioned such that a small force is required to fully engage blade with end plate notch 33. Disengagement is thereby prevented unless an equal but opposite force perpendicular to end plate web 34 is applied. Such forces are virtually nonexistent after panel assembly and installation of preassembled panel in the process apparatus. Additional lateral restraint against end plate rotation and disengagement of notches 25 and 33 is provided by laterally adjacent panels or structural elements of the apparatus once installation is complete end plate design of the present invention also provides a positive blade end seal thereby eliminating voids or discontinuities in the mist eliminator section and preventing by-pass and carry over of liquid that would otherwise occur.

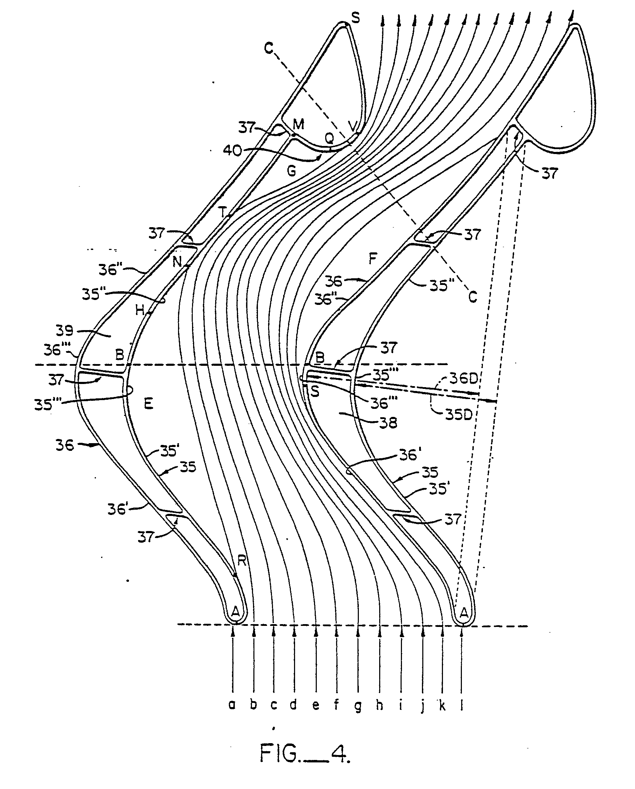

The unique mist eliminator blade design of the present invention is best seen in FIG. 4, as well as the dimensional relationships between adjacent blades and the gas passage there between. The blades may be constructed as either a single wall or as a double wall as shown in the preferred embodiment of FIG. 4. The blade top surface 35 is connected to the bottom surface 36 by means of a plurality of webs 37 which are positioned to maintain the proper dimensional relationships between top and bottom blade surfaces while adding to the structural strength and rigidity of the blade.

As is apparent in the drawing the top surface 35 of each blade is concave being made up of an inlet inclined section 35′ and an outlet inclined section of opposite slope 35″ connected to the inlet section 35′ by an intermediate transition section 35‴. The bottom surface 36 is convex having an inlet inclined section 36′ projecting into the gas stream for turning the gas stream toward the bottom surface of the facing blade, an outlet inclined surface 36″ of opposite slope and a transition region 36‴. The thickness of the blade 23 is greater between the transition regions of its convex and concave surfaces than the thickness between the inclined sections of the surfaces. As a consequence, the length of the deviation 36D of the convex surface 36 is greater than the length of the deviation 35D of the concave surface as measured from corresponding portions of the inclined sections of those surfaces as illustrated for the upper blade 23 in FIG. 4.

The outlet inclined sections of each blade are longer than the inlet inclined sections and a convex projection or airfoil 40 is provided on the top concave surface of each blade for establishing a stagnation region upstream thereof for the collection of small droplets in the gas stream.

As an aid to describing gas flow behavior, streamlines a, b, c . . . l are shown in the gas passage between blades. Gas flow between two streamlines does not cross streamline boundaries by definition, hence gas flow direction is parallel to streamlines at any point in the flow field. Areas where streamlines are closer together are areas of relatively higher gas flow velocities as dictated by flow continuity considerations. Gas enters the gas flow passage between blade at inlet plane A—A of FIG. 4 and immediately begins to turn and accelarate as gas impacts the inlet inclined section 36′ of bottom blade surface 36 of the right blade 38. Gas momentum and continuity considerations also cause the gas flow to separate from the inlet inclined section 35′ of the top blade surface 35 of left blade 39 in the vicinity of point R which also acts to accelerate the gas. Region E adjacent a major portion of the inlet inclined section 35′, the transition region 35‴ and the initial portion of outlet inclined section 35″ of the concave top surface 35 of lefthand blade 39 is a turbulent wake region with no directional flow characteristics as is region F which is adjacent the transition section 36‴ and the initial portion of outlet inclined section 36″ of the convex bottom surface of the ringhand blade 38. Gas flow continues to accelerate as it approaches plane B—B at the transition section 35‴ and 36‴ of the facing blade surfaces reaching a peak velocity in the vicinity of plane B—B. As gas continues to flow beyond plane B—B, flow separation again occurs in the vicinity of point S on right blade 38, and the left portion of gas flow impacts blade 39 at the outlet inclined section 35″ of top surface 35 in the vicinity of point N. Gas impacting the leading edge of the airfoil section 40 defined by points M, Q, V, S on left blade top surface 35 creates a stagnation region G immediately forward of the airfoil leading edge. Impact pressure in region G causes the main body of gas flow upstream to separate from blade top surface 35 in the vicinity of point T whereupon it accelerates again reaching a peak velocity in the vicinity of plane C—C as the gas flows around the airfoil section 40. Beyond plane C—C the gas flow expands and decelerates as it approaches the exit of the gas flow passage. Those skilled in the art will recognize the flow field described above to be generally correct for the gas passage defined by the blade profile upper and lower surfaces and will recognize that specific points of flow separation, peak velocities, size of wake and stagnation regions, etc. will be determined by the physical dimensions of the blade profile and the gas flow rate. The unique non-symmetrical sinus blade shape of the present invention with extended surface B, H, N, T, M and airfoil section M, Q, V, S incorporated near the trailing edge of the blade profile results in a significant improvement in the removal of entrained droplets from the gas stream while keeping energy losses to a minimum and extending the useful gas flow operating range beyond the capabilities of known mist eliminator designs suitable for the intended purpose.

Entrained droplets of varying sizes enter the passage between blades moving in the same direction as the entering gas stream. The object of the blade design is to remove these droplets from the gas stream by causing them to impact the blade surface where they will agglomerate and can be returned to the process by means of gravity forces. The path of travel of droplets within the gas flow passage will be a function of droplet momentum and external forces acting on the droplets within the confines of the gas flow passage. The primary external forces acting on a droplet as viscous and aerodynamic forces which result from relative motion between the droplet and gas stream. These forces change rapidly both in magnitude and direction within the gas flow field and their influence on the ultimate path of travel of the droplet will depend on its momentum at the instant the force is applied. Droplet momentum at any instant is the product of its mass and velocity. The magnitude of this momentum may be considered as a measure of the droplet's ability to resist changes in the initial path of travel when external forces are applied.

Larger droplets entering the passage between blades possess relatively high initial momentum because of their large mass even though their velocity is somewhat below that of the main gas flow. Their path of travel is influenced only slightly by viscous and aerodynamic forces that occur as the main gas stream makes the initial turn and accelerates in the passage between blades. The larger droplets move in lines essentially parallel to the direction of the undisturbed gas flow entering the blade passage and impact the blade surfaces at points intersecting this line of travel. If gas velocities are high, some of the larger droplets will shatter upon impact with the blade and fragments of liquid will continue on with the gas stream as smaller droplets.

Smaller droplets enter the gas passage at velocities only slightly below that of the gas stream but have substantially lower momentum because of their much smaller mass. Their path is easily influenced by viscous and aerodynamic forces as the gas flow initially turns and accelerates between plane A—A and plane B—B in FIG. 4. The smallest droplets take essentially the same path as the gas up to plane B—B and accelerate reaching velocities very close to that of the gas stream which substantially increases their momentum. Beyond plane B—B most of the smallest droplets have attained sufficient momentum to cause them to cross streamlines and to impact on blade 39 top surface 35 between points N, T and M. Those small droplets that escape impact are close to the blade surface and enter the stagnation area of region G outside the main gas flow stream where they impinge on the airfoil section leading edge between points M and Q. Without the extended blade surface between points B and M and the airfoil section M, Q, V, S, many of the smallest droplets would remain entrained in the gas flow and escape. Also, at lower gas flow rates some of the smaller droplets have sufficient surface tension to cause them to bounce after they impact the blade surface thereby causing them to become retrained in the gas stream and escape. In the present invention this is avoided since bouncing droplets enter region G and impact the airfoil leading edge.

As previously described, liquid collected on blade surfaces may be torn from these surfaces at critical points thereby becoming re-entrained in the gas stream. This is most likely to occur at points where liquid build-up on blade surfaces is greatest and concurrently where gas velocities are highest and the gas stream has a tendency to separate from the blade surface. In the present invention, the most critical area in this regard is in the vicinity of point S on blade 38. Carry over by this phenomenon is reduced in the present invention since any liquid re-entrained at point S will be directed towards collecting surface N, T, M and the airfoil leading edge by the gas stream in the vicinity of point S. The presence of the airfoil section on top blade surface 35 and the fact that flow separation points R and V occur where no water is present on the blade surface virtually eliminates the possibility of carry over by this phenomenon from top blade surfaces. Blade designs of heretofore known mist eliminators have at least one critical tear-off point on their top surface and inadequate means for limiting or recovering liquid torn from blade surfaces which limit their gas flow operating range.

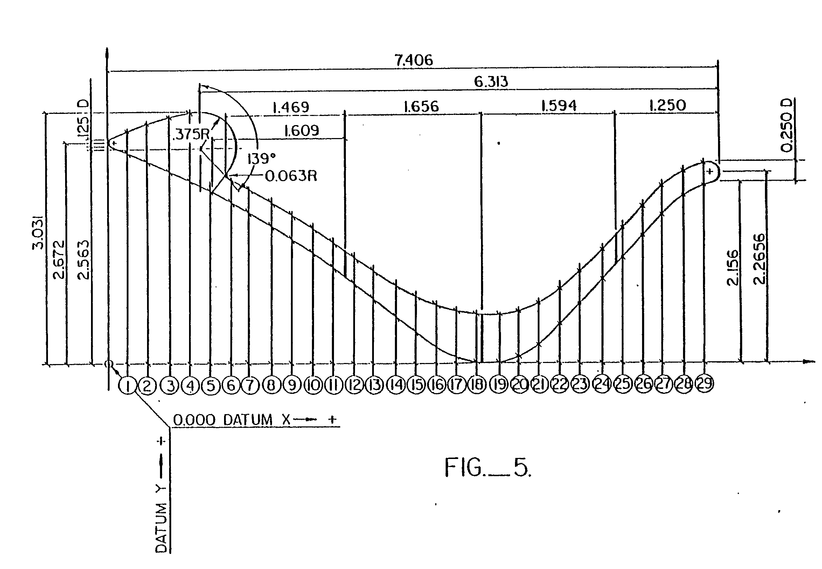

While it is believed that the preferred embodiment has been described in and illustrated in sufficient detail for a person skilled in the art to practice the invention, FIG. 5 is included to provide an example of a precise mist eliminator blade in accordance with the preferred embodiment. The figure provides certain specific dimensions and specified stations along the length of the blade to provide station coordinates for the blade in accordance with the following table:

**0 020 705**

| STATION | X CORD | | SURFACE—Y | | BOTTOM SURFACE—Y | |
|---|---|---|---|---|---|---|
| | Inches | Cm. | Inches | Cm. | Inches | Cm. |
| 1 | 0.250 | .635 | 2.813 | 7.145 | 2.516 | 6.391 |
| 2 | 0.500 | 1.270 | 2.891 | 7.343 | 2.422 | 6.152 |
| 3 | 0.750 | 1.905 | 2.969 | 7.541 | 2.313 | 5.875 |
| 4 | 1.000 | 2.540 | 3.016 | 7.661 | 2.172 | 5.517 |
| 5 | 1.250 | 3.175 | Circle | Circle | 2.063 | 5.240 |
| 6 | 1.500 | 3.810 | 2.234 | 5.674 | 1.938 | 4.923 |
| 7 | 1.750 | 4.445 | 2.078 | 5.278 | 1.797 | 4.564 |
| 8 | 2.000 | 5.080 | 1.906 | 4.841 | 1.609 | 4.087 |
| 9 | 2.250 | 5.715 | 1.766 | 4.486 | 1.453 | 3.691 |
| 10 | 2.500 | 6.350 | 1.547 | 3.929 | 1.297 | 3.294 |
| 11 | 2.750 | 6.985 | 1.438 | 3.652 | 1.125 | 2.857 |
| 12 | 3.000 | 7.620 | 1.266 | 3.216 | 0.938 | 2.383 |
| 13 | 3.250 | 8.255 | 1.156 | 2.936 | 0.766 | 1.946 |
| 14 | 3.500 | 8.890 | 0.938 | 2.383 | 0.547 | 1.389 |
| 15 | 3.750 | 9.525 | 0.813 | 2.065 | 0.375 | .952 |
| 16 | 4.000 | 10.160 | 0.703 | 1.786 | 0.188 | .478 |
| 17 | 4.250 | 10.795 | 0.641 | 1.628 | 0.063 | .160 |
| 18 | 4.500 | 11.430 | 0.594 | 1.509 | 0.016 | .041 |
| 19 | 4.750 | 12.065 | 0.547 | 1.389 | 0.016 | .041 |
| 20 | 5.000 | 12.700 | 0.641 | 1.628 | 0.063 | .160 |
| 21 | 5.250 | 13.335 | 0.734 | 1.864 | 0.219 | .556 |
| 22 | 5.500 | 13.970 | 0.890 | 2.261 | 0.484 | 1.229 |
| 23 | 5.750 | 14.605 | 1.109 | 2.817 | 0.734 | 1.864 |
| 24 | 6.000 | 15.240 | 1.359 | 3.452 | 1.000 | 2.540 |
| 25 | 6.250 | 15.875 | 1.609 | 4.087 | 1.250 | 3.175 |
| 26 | 6.500 | 16.510 | 1.891 | 4.803 | 1.531 | 3.889 |
| 27 | 6.750 | 17.145 | 2.141 | 5.438 | 1.781 | 4.524 |
| 28 | 7.000 | 17.780 | 2.297 | 5.834 | 2.000 | 5.080 |
| 29 | 7.250 | 18.415 | 2.391 | 6.073 | 2.109 | 5.357 |

The blades are placed on 2 3/4" 6.985 cm centers and lateral spacing between the blade centerline and position M on the blade is 3/4" 1.905 cm.

It will be appreciated that additional or secondary airfoils can be added besides the one airfoil illustrated in the drawing.

While the invention has been described with reference to the illustrated counterflow cooling tower, it has already been pointed out that the mist eliminator is equally applicable to other systems, such as crossflow cooling towers. It is believed advantageous in a crossflow cooling tower to arrange the mist eliminators in accordance with the present invention at an angle to the normal horizontal path for the gas flow so that the gas stream exiting from the mist eliminator will be at least partially turned toward the fan.

### Claims

1. A mist eliminator for removing droplets of liquid entrained in a gas stream comprising: a plurality of longitudinally extending eliminator blades (38, 39) positioned in side by side spaced apart relation for passing a gas stream through the space between adjacent blades from an inlet to an outlet, each blade having an inlet inclined section (35', 36') and an outlet inclined section (35", 36"), said inlet and said outlet inclined sections having opposite slope and connected by an intermediate transition section (35''', 36''') thereby establishing a convex surface on the bottom (36) of said blade (38, 39) and a concave surface on the top surface (35) of said blade, characterized by means (40) forming a further convex surface only on said outlet inclined section (35") of said concave surface, on the top surface (35) of said blade (38, 39) and in continuity with said concave surface and projecting into the gas stream for establishing a stagnation region (G) upstream of said convex surface means (40).

2. The mist eliminator of Claim 1 characterized in that said outlet section (35", 36") has a trailing end differing in shape from the leading end of said inlet section (35', 36').

3. The mist eliminator of claims 1 or 2 characterized in that said outlet section (35", 36") is longer than said inlet section (35', 36').

4. The mist eliminator of claims 1, 2 or 3 characterized in that said convex projecting surface means (40) includes an airfoil section on said outlet inclined section (35") of the top concave surface (35) of said blade (38, 39).

5. Mist eliminator of claims 1, 2, 3 or 4 including a pair of end plates (24) for supporting the opposite ends of said blades (23) wherein each end of said blade (23) is. mechanically interlocked with one of said side plates (24), characterized in that each of said end plates (24) has a pair of spaced apart flanges (30, 31) with at least one of said flanges having an adjoining rib (29, 32) longitudinally thereof projoining rib (29, 32) longitudinally thereof proother flange (31, 30), each of said blades (23) has notched out portions (25, 26) longitudinally thereof at each end thereof for engaging a corresponding flange notched out portion (28, 33), and said convex surface means (40) at each end of each of said blades has a notched out portion (27) transversely thereof for engaging said projecting rib (29).

6. Mist eliminator of claim 5 adjoining rib (29, 32) projects perpendicularly to its respective flange (30, 31).

7. Method for removing droplets entrained in a gas stream suited for a mist eliminator such as one according to any one of claims 1 to 6 comprising the steps of: first turning the gas stream at one side toward the other side and accelerating the stream for collecting large droplets at said one side, turning the gas stream back toward said one side characterized by accelerating the stream after turning the gas stream back toward said one side and establishing a stagnation region only at said other side down stream of said second turn for collecting small droplets at said other side of said stream.

### Revendications

1. Eliminateur de brouillard pour enlever des gouttelettes de liquide entraînées dans un courant gazeux comprenant: plusieurs lames d'éliminateur s'étendant longitudinalement (38, 39) placées côte à côte et espacées pour laisser passer un courant gazeux à travers l'espace entre des lames adjacentes d'une entré vers une sortie, chaque lame possédant une partie entrée inclinée (35', 36') et une partie sortie inclinée (35", 36"), lesdites parties entrée et sortie inclinées ayant une inclinaison opposée et étant reliées par une partie de transition intermédiaire (35''', 36'''), créant de ce fait une surface convexe sur le dessous (36) de ladite lame (38, 39) et une surface concave sur la surface de dessus (35) de ladite lame, caractérisé par un moyen (40) formant une autre surface convexe sur ladite partie sortie inclinée (35") de ladite surface concave seulement, sur la surface de dessus (35) de ladite lame (38, 39) et présentant une continuité avec ladite surface concave et faisant saillie le courant gazeux pour établir une zone de stagnation (G) en amont dudit moyen de surface convexe (40).

2. Eliminateur de brouillard selon la Revendication 1, caractérisé en ce que ladite partie sortie (35", 36") possède un bord de fuite différant dans sa forme du bord d'attaque de ladite partie entrée (35', 36').

3. Eliminateur de brouillard selon l'une des revendications 1 ou 2, caractérisé en ce que ladite partie sortie (35", 36") est plus longue que ladite partie entrée (35', 36').

4. Eliminateur de brouillard selon l'une des revendications 1, 2 ou 3, caractérisé en ce que ledit moyen de surface saillante convexe (40) comporte une partie aileron sur ladite partie sortie inclinée (35") de la surface de dessus concave (35) de ladite lame (38, 39).

5. Eliminateur de brouillard selon l'une des revendications 1, 2, 3 ou 4 comportant deux plaques terminales (24) pour supporter les extrémités opposées desdites lames (23) où chaque extrémité de ladite lame (23) est emboîtée mécaniquement avec une desdites plaques latérales (24), caractérisé en ce que chacune desdites plaques terminales (24) possède deux rebords espacés (30, 31), au moins un desdits rebords possèdant une arête adjacente (29, 32) qui lui est longitudinale et fair saillie à partir de celui-ci dans la direction opposée audit autre rebord (31, 30), chacune desdites lames (23) possède des parties à encoches (25, 26) qui lui sont longitudinales à chacune de ses extrémités pour engager une partie à encoches du rebord correspondant (28, 33), et ledit moyen de surface convexe (40) à chaque extrémité de chacune desdites lames possède une partie à encoches (27) qui lui est transversale pour engager ladite arête saillante (29).

6. Eliminateur de brouillard selon la Revendication 5, caractérisé en ce que chaque arête adjacente (29, 32) fait saillie d'une façon perpendiculaire à son rebord respective (30, 31).

7. Procédé pour enlever des gouttelettes entraînées dans un courant gazeux approprié à un éliminateur de brouillard comme un de ceux selon l'une quelconque des Revendications 1 à 6 comprenant les étapes de: tout d'abord le fait de diriger le courant gazeux d'une premier côté vers l'autre côté et l'accélération du courant pour recueillir de grandes gouttelettes sur le premier côté ensuite le fait de diriger de nouveau le courant gazeux vers ledit côté, caractérisé par l'accélération du courant après avoir dirigé de nouveau le courant gazeux vers ledit côté et l'établissement d'une zone de stagnation de l'autre côté seulement en aval dudit second changement de direction pour recueillir des petites gouttelettes de l'autre côté dudit courant.

**Patentansprüche**

1. Nebelabscheider zum Entfernen von Flüssigkeitstropfen, die in einem Gasstrom mitgeführt werden, bestehend aus einer Anzahl von in Längsrichtung erstreckenden Abscheiderblättern (38, 39), die im Abstand nebeneinander angeordnet sind, um einen Gasstrom durch den Raum zwischen benachbarten Blättern von einem Einlaß zu einem Auslaß durchtreten zu lassen, wobei jedes Blatt einen geneigten Einlaßabschnitt (35', 36') und einen geneigten Auslaßschnitt (35", 36") aufweist, wobei die geneigten Einlaß- und Auslaß-Abschnitte entgegengesetzte Neigung haben und mit einem dazwischen liegenden Übergangsabschnitt (35''', 36''') verbunden sind, so daß eine konvexe Fläche am Boden (36) des Blattes (38, 39) und eine konkave Fläche auf der Oberseite (35) des Blattes gebildet wird, gekennzeichnet, durch Mittel (40), die eine weitere konvexe Fläche nur auf den geneigten Auslaßabschnitten (35") der konkaven Fläche auf der Oberseite (35) des Blattes (38, 39) und in Fortführung der konkaven Fläche bilden, und die in den Gasstrom vorstehen, um einen Stagnationsbereich (G) stromaufwärts von den konvexen Oberflächenmitteln (40) aufzubauen.

2. Nebelabschneider nach Anspruch 1, dadurch gekennzeichnet, daß der Auslaßschnitt (35", 36") ein nacheilenden Ende aufweist, das sich in der Firm vom führenden Ende des Einlaßabschnittes (35', 36') unterscheidnet.

3. Nebelabscheider nach Anspruch 1 oder 2, dadurch gekennzeichnet, daß der Auslaßabschnitt (35", 36") länger ist als der Einlaßabschnitt (35', 36').

4. Nebelabscheider nach Anspruch 1, 2 oder 3, dadurch gekennzeichnet, daß die konvexen, vorstehenden Oberflächenmittel (40) einen stromlinienförmigen Abschnitt auf dem geneigten Auslaßabschnitt (35") auf der oberen konkaven Fläche (35) des Blattes (38, 39) einschließen.

5. Nebelabscheider nach Ansprüchen 1, 2, 3 oder 4, der zwei Endplatten (24) zum Abstützen der entgegengesetzten Enden der Blätter (23) aufweist, wobei jedes Ende des Blattes (23) mechanisch mit einer der Seitenplatten (34) verriegelt ist, dadurch gekennzeichnet, daß jede der Endplatten (24) ein Paar voneinander entfernte Flansche (30, 31) aufweist, wobei wenigstens einer der Flansche eine anschließende Rippe (29, 32) in Längsrichtung aufweist, die in einer Richtung weg vom anderen Flansch (31, 30) vorsteht, jedes der Blätter (23) ausgekerbte Teile (25, 26) in Längsrichtung an jedem Ende aufweist, um mit einem entsprechend ausgekerbten Teil (28, 33) des Flansches in Eingriff zu kommen, und die konvexen Oberflächenmittel (40) an jedem Ende jedes der Blätter einen ausgekerbten Teil (27) in Querrichtung hat, um mit der vorstehenden Rippe (29) in Eingriff zu kommen.

6. Nebelabscheider nach Anspruch 5, dadurch gekennzeichnet, daß eine anschließende Rippe (29, 32) senkrecht zu dem entsprechenden Flansch (30, 31) vorsteht.

7. Verfahren zum Abscheiden von in einem Gasstrom mitgeführten Tropfen, geeignet für einen Nebelabscheider wie einen nach einem der Ansprüche 1 bis 6 bestehend aus den Schritten: zunächst Wenden des Gasstroms auf einer Seite zur anderen Seite hin und Beschleunigen des Stroms zum Ansammeln von großen Tropfen an dieser einen Seite, Wenden des Gasstroms zurück zur einen Seite hin, gekennzeichnet durch Beschleunigen des Stroms nach dem Wenden des Gasstroms zurück auf die eine Seite zu und Aufbau eines Stagnationsbereichs nur an dieser anderen Seite stromabwärts von dem zweiten Wenden, um kleine Tropfen an der anderen Seite des Stroms zu sammeln.

FIG.___1.

FIG__2.

FIG__3.

FIG.__4.

FIG.__5.

0 020 705